Europäisches Patentamt

European Patent Office

Office européen des brevets

(19)

(11) EP 0 820 069 A1

(12) EUROPEAN PATENT APPLICATION

(43) Date of publication:
21.01.1998 Bulletin 1998/04

(51) Int. Cl.$^6$: **G21K 4/00**, C09K 11/85,
C09K 11/78

(21) Application number: 96202050.9

(22) Date of filing: 19.07.1996

(84) Designated Contracting States:
DE FR GB

(71) Applicant: AGFA-GEVAERT N.V.
2640 Mortsel (BE)

(72) Inventors:
• Caron, Koenraad
2640 Mortsel (BE)
• Verstrepen, Elisabeth
2640 Mortsel (BE)
• Leblans, Paul
2640 Mortsel (BE)

(54) **An X-ray intensifying screen comprising a monoclinic m yttrium tantalate phosphor**

(57) A supported or self-supporting X-ray intensifying screen is provided comprising particles of a niobium doped, monoclinic M, yttriumtantalate (MYT) phosphor corresponding to formula I

$$(Y_{1-(2/3)x},Sr_x)TaO_4:nNb$$

wherein $0 \le x \le 1$ and $0 < n \le 0.05$,
and particles of an europium doped bariumfluorohalide (BAF) phosphor and wherein both said phosphors a present in a ratio MYT:BAF between 25:75 and 100:1

Screen/film combinations in a speed class between the 50 and 800 class are also provided.

EP 0 820 069 A1

Printed by Xerox (UK) Business Services
2.15.8/3.4

## Description

### 1. Field of the invention.

This invention relates to prompt emitting X-ray screens useful in projection radiography.

### 2. Background of the Invention

It is well known that high energy radiation can cause appropriate substances to luminesce. Substances showing the phenomenon of luminescence under the influence of high energy radiation are called phosphors or scintillators.

A well known use of phosphors is in the production of X-ray images. In a conventional radiographic system an X-ray radiograph is obtained by X-rays transmitted imagewise through an object and converted into light of corresponding intensity in a so-called intensifying screen (X-ray conversion screen) wherein phosphor particles absorb the transmitted X-rays and convert them into visible light and/or ultraviolet radiation to which a photographic film is more sensitive than to the direct impact of X-rays.

In practice the light emitted imagewise by said X-ray intensifying screen irradiates a contacting photographic silver halide emulsion layer film which after exposure is developed to form therein a silver image in conformity with the X-ray image.

For use in common medical radiography (projection radiography) the X-ray film comprises a transparent film support, coated on both sides with a silver halide emulsion layer. During the X-ray irradiation said film is arranged in a cassette between two X-ray intensifying screens each of them making contact with its corresponding silver halide emulsion layer.

Phosphors suited for use in the conventional radiographic system must have a high prompt emission of fluorescent light on X-ray irradiation and low afterglow in favour of image sharpness. The relationship between resolution and speed of X-ray intensifying screens is described e.g. in Med. Phys. 5(3), 205 (1978).

Well-known phosphors for use in intensifying screens are tantalate phosphors of the monoclinic M' structure as disclosed in EP-B 011 909 and more recently in US-Patent 5,064,729 from Du Pont, wherein an improved phosphor efficiency and purity of said tantalate phosphors is achieved by reducing the level of contaminants in the phosphor reaction mixture. The preparation of rare earth tantalate and niobate phosphors showing low afterglow by mixing a diadic metal and an alkali to the basic materials has been disclosed by Nichia Kagaku in EP-A 202 875 and US-Patent 4,959,174.

Other interesting phosphors for use in intensifying screens are rare earth activated alkaline earth fluorohalide phosphors as disclosed by Philips in US-Patents 4,157,981 and 4,075,495.

Recently the use and preparation of a phosphor mixture of a divalent barium fluorobromide and a niobium doped monoclinic M' yttriumtantalate for X-ray intensifying screens has been disclosed in US-Patent 5,077,145. Advantages mentioned are the production of less cross-over light, a better graininess and sharpness and a reduced exposure amount.

In the field of projection radiography the need for dose reduction, while keeping image quality constant, i.e. the need for lowering the exposure of the patient to X-ray, while still providing diagnostically meaningful images, is a constantly felt need and therefore further improvements in X-ray screens and/or films are desirable.

### 3. Objects and Summary of the Invention.

It is an object of the invention to provide X-ray intensifying screens providing in combination with silver halide emulsion films, the required speed, for each of the different speed classes combined with high image quality, especially sharpness.

It is a further object of the invention to provide X-ray intensifying screens that emit, upon irradiation with X-rays, light with a wavelength that matches well the absorbtion characteristics of the silver halide crystal comprised in the silver halide material used in combination with the screens.

Further objects and advantages of the invention will become clear from the detailed description hereinafter.

The objects of the invention are realized by providing a supported or self-supporting X-ray intensifying screen comprising particles of a niobium doped, monoclinic M, yttriumtantalate (MYT) phosphor corresponding to formula I $(Y_{1-(2/3)x}, Sr_x)TaO_4:nNb$ wherein $0 \leq x \leq 1$ and $0 < n \leq 0.05$, and particles of an europium doped bariumfluorohalide (BAF) phosphor and wherein both said phosphors a present in a ratio MYT:BAF between 25:75 and 100:1, provided that when x = 0, said ratio MYT:BAF is between 25:75 and 99:1.

### 4. Detailed Description of the Invention.

In the art of making of X-ray intensifying screens, it has been disclosed in, e.g., EP-A 435 241 and EP-A 592 724, to use mixtures of M' $YTaO_4$:Nb and BaFBr:Eu for making UV-blue emitting X-ray intensifying screens giving less cross-over light, a better graininess and sharpness and a reduced exposure amount. These X-ray intensifying screens emit light, upon irradiation by X-rays, with a maximum emission peak situated around 390 nm. The amount of emitted light with a wavelength over 425 nm, as disclosed in the documents cited above, is quite low (the relative emission intensity at 425 nm is roughly 10 % of the peak emission intensity at 390 nm. This has as main advantage that the cross-over light is diminished, and the sharpness increased. The combination of mainly UV emitting X-ray intensifying screens with silver halide photographic materials in radiography tends to give upon image-wise X-ray irradiation and subsequent processing of the film, an image with lower contrast than the combination of X-ray intensifying screens emitting an higher portion of light in the blue region of the spectrum. This effect is due to the high absorption of the UV light in the upper layers of the silver halide photographic material. The light emitted by the X-ray intensifying screens comprising a mixture of M' $YTaO_4$:Nb and BaFBr:Eu is concentrated in a relatively small region of wavelengths that matches only with a part of the light absorption spectrum of the silver halide used in the film that is combined with the X-ray intensifying screen. Even if said silver halide is pure silver chloride, light of wavelength 425 nm is readily absorbed. Therefore it has to be expected that X-ray intensifying screens that emit, upon irradiation with X-rays also an appreciable portion of light with wavelengths around 425 nm would give higher speed X-ray systems showing higher gradation. It was however expected that lower sharpness would be seen, since the amount of cross-over light would be larger.

Surprisingly it was found that it was possible to manufacture X-ray intensifying screens comprising particles of a niobium doped, monoclinic M, yttriumtantalate (MYT) phosphor, that yielded high quality in terms of speed sharpness relation. Especially when combining monoclinic M $YTaO_4$:Nb (MYT) and BaFX:Eu (BAF), wherein X represents an halogen selected from the group consisting of Cl, Br and I, in a X-ray intensifying screen, screens could be manufactured that, in comparison to X-ray intensifying screens with the mixture monoclinic M' (Y,Sr)$TaO_4$:Nb and BaFBr:Eu, gave a higher relative light emission at 425 nm and thus could be used to provide an X-ray system with higher speed and higher contrast as expected, and that, unexpectedly, had an equal sharpness (measured as SWR).

When using mixtures of monoclinic M $YTaO_4$:Nb (MYT) corresponding to formula I $(Y_{1-(2/3)x},Sr_x)TaO_4$:nNb wherein $0 \leq x \leq 1$ and $0 < n \leq 0.05$ and BaFX:Eu phosphors (BAF), wherein X represents an halogen selected from the group consisting of Cl, Br and I, in X-ray intensifying screens, with a ratio MYT:BAF between 25:75 and 100:0, screens useful in any normal radiographic speed class (50 to 800) could be produced. A monoclinic M yttriumtantalate phosphor, corresponding to formula I, but wherein x = 0, when used as sole phosphor (i.e. the ratio MYT:BAF is 100:0) gives, as disclosed in US 4,225,653, a lower speed. Therefore, when using such a phosphor in a screen according to this invention, the ratio MYT:BAF extends from 25:75 to 99:1. In a preferred embodiment, in formula I, $10^{-5} \leq x \leq 1$ and $0 < n \leq 0.05$ and the ratio MYT:BAF extends from 25:75 to 100:0.

Preferably said screens have a total phosphor content between 30 and 90 $mg/m^2$, more preferably between 40 and 80 $mg/cm^2$.

The average grain size of phosphor particles of the monoclinic M $YTaO_4$ phosphor is, for use in the present invention, preferably in the range of 2 to 25 $\mu m$, and more preferably in the range of 2 to 9 $\mu m$.

The monoclinic M $YTaO_4$ can be prepared by mixing the phosphor precursors and then firing said raw mix as described for the preparation of monoclinic M' $YTaO_4$ in EP-A 202 875. But instead of firing the raw mix at a temperature between 1100 and 1300 °C, the firing proceeds at a temperature between 1400 and 1600 °C. In order to incorporate Sr in the phosphor, to produce the monoclinic M $YTa_4$:Nb phosphor that is preferably used in the invention, Sr compounds are mixed with the other phosphor precursors in the raw mix.

The Sr compound (and optionally the Li compounds) can also be added in the flux that is used during the firing of the raw mix as described in EP-A 491 309 and US 5,310,505.

The raw mix preferably comprises $Y_2O_3$, $Ta_2O_5$, $Nb_2O_5$. When Sr compounds are comprised in the raw mix, preferably $SrCl_2$ is used.

Useful fluxes for firing the raw mix and producing a monoclinic M yttriumtantalate phosphor useful in this invention can be binary fluxes as, e.g. $SrCO_3$ and LiCl, $ZnCO_3$ and LiCl, $CdCO_3$ and LiCl, $SrCl_2$ and LiCl, $MgCl_2$ and LiCl, $BaCl_2$ and NaCl, BeO and KCl. Also a binary flux of $Li_2SO_4$ and $L_2SiO_3$, as disclosed in US-P 5,064,729 can be used in the production of a monoclinic M yttriumtantalate phosphor useful in this invention. Examples of useful ternary fluxes in the production of an yttriumtantalate phosphor useful in this invention, are : $BaCl_2/MgCl_2/NaCl$ as disclosed in US-P 5,110,499, $Na_2SO_4/SrCl_2/Na_2SiO_3$ as disclosed in EP-A 542 018 and $Ga_2O_3/RbCl/SrF_2$.

The europium doped bariumfluorohalide phosphor is preferably a BaFBr phosphor and comprises preferably between 0.1 and 5 % of $Eu^{2+(3+)}$, i.e. the preferred doped bariumfluorohalide phosphor corresponds to formula BaFBr:$zEu^{2+(3+)}$, wherein $10^{-3} \leq z \leq 0.05$. Such a phosphor can be prepared according to known methods for the preparation of barium fluorochloride phosphors described e.g. in GB-P 1,161,871 and 1,254,271 and in US-P 4,088,894.

The average grain size of phosphor particles of the BaFBr:Eu phosphor is, for use in the present invention, preferably in the range of 2 to 25 $\mu m$, and more preferably in the range of 2 to 9 $\mu m$.

It showed that when in the mixture of monoclinic M $YTaO_4$:Nb (MYT) and BaFBr:Eu (BAF) the ratio MYT:BAF was between 25:75 and 100:0 it was possible to produce X-ray intensifying screens with good quality in terms of speed and sharpness. It was shown that screens according to this invention gave a performance equal or superior to screens comprising either monoclinic M' $YTaO_4$:Nb alone or in combination with BaFBr:Eu.

X ray screens according to the present invention comprise a different total amount of MYT + BAF phosphor and a different ratio MYT:BAF for each speed class. In table 1, the preferred total amounts MYT + BAF, and the ratio MYT:BAF for each speed class is given (the figures report both to the front and the back screen). The speed (sensitivity) is defined according to ISO/DP9236 and is related to the combination of a pair of screens with a double-side coated silver halide material. The speed class of a particular system (X-ray intensifying screen according to the present invention + film) is measured according to DIN 6867 and is expressed as $1000/\mu Gy$, wherein $\mu Gy$ is the X-ray dose necessary to achieve a density of 1.00 above fog on the film. There are five speed classes defined (50, 100, 200, 400, 800), in each of the classes a range of speeds is covered. E.g. the class 50 comprises systems necessitating from 25 to 14.3 $\mu Gy$ to give density = 1.00 above fog on the film (i.e. having a speed between 40 and 70), the 100 class comprises systems necessitating from 12.5 to 7.1 $\mu Gy$ to give density = 1.00 above fog on the film (i.e. a speed between 80 and 140), the class 200 comprises systems necessitating from 6.3 to 3.6 $\mu Gy$ to give density = 1.00 above fog on the film (i.e. a speed between 160 and 280), the 400 class comprises systems necessitating from 3.1 to 1.8 $\mu Gy$ to give density = 1.00 above fog on the film (i.e. a speed between 320 and 560) and the 800 class comprises systems necessitating from 1.6 to 0.9 $\mu Gy$ to give density = 1.00 above fog on the film (i.e. a speed between 640 and 1120).

To determine the speed classes to which the screens belong, a pair of the screens under investigation was combined with a double sided, blue/UV sensitive X-ray film of regular speed, i.e. a film necessitating an exposure to light with wavelength of 425 nm of between 9 and 12.5 $\mu J/m^2$ for a density of 1.00 above fog (e.g. AGFA CURIX RP1, tradename of Agfa-Gevaert NV Mortsel, Belgium) and the combination screen pairs/film exposed to X-rays according to DIN 6867. Herein after the wording "regular film" is used to designate a film with a speed as defined immediately above and the wording "half speed film" to designate a film with half the speed of a regular film. After exposure the film was processed with the following developing liquid, followed by fixing and rinsing at the indicated temperature and processing time.

Composition of the developing liquid (pH : 10.1) - (35 °C, 27 s).

| Hydroquinone | 30 g/l |
|---|---|
| Potassium sulphite | 64 g/l |
| 1-Phenyl-3-pyrazolidinone | 1.5 g/l |
| Potassium bromide | 4 g/l |
| Glutardialdehyde | 4.7 g/l |
| The pH was adjusted at 10.1 with bicarbonate/carbonate buffer. | |

Composition of the fixing liquid (pH : 4.3) - (34 °C, 18 s).

| Ammonium thiosulphate | 132 g/l |
|---|---|
| Sodium sulphite | 10.8 g/l |
| Aluminium sulphate | 5.4 g/l |
| The pH was adjusted at 4.3 with acetic acid/acetate buffer.0 | |

The rinsing proceeded with tap water at a temperature of 27 °C for a duration of 28 s.

It is evident that the speed class of the screen, defined as described above, has to be combined with the speed of the film combined with it to determine the speed class of the system. E.g. when combining a screen pair according this invention, having a speed that is defined as in the configuration described above (in combination with a regular film) to be 400, with a film having half the speed of the regular film, the system will be a 200 system and when combining said screen pair with a film with double speed the system will be a 800 system.

In a specific embodiment the screen pairs according to the present invention are asymmetric and comprise a low total amount of MYT+BAF in the front screen and a higher amount in the back screen. In a further preferred embodiment, in the back screen, the amount of the emitted light that is reflected is diminished by using a non reflecting support for the back screen.

TABLE 1

| Speed class | MYT + BAF Total phosphor content (mg/cm$^2$) | MYT:BAF |
|---|---|---|
| 100 | 30 to 45 | 90:10 to 100:0 |
| 200 | 30 to 65 | 75:25 to 100:0 |
| 400 | 45 to 80 | 50:50 to 100:0 |
| 800 | 55 to 80 | 25:75 to 50:50 |

X-ray intensifying screens according this invention can be self-supporting or supported.

X-ray intensifying screens in accordance with the present invention generally comprise in order : a support (also called substrate), at least one layer comprising phosphor particles dispersed in a suitable binder and a protective coating coated over the phosphor containing layer to protect said layer during use. Further, a primer layer is sometimes provided between the phosphor containing layer and the substrate to closely bond said layer thereto. Examples of support materials include cardboard, plastic films such as films of cellulose acetate, polyvinyl chloride, polyvinyl acetate, polyacrylonitrile, polystyrene, polyester, polyethylene terephthalate, polyamide, polyimide, cellulose triacetate and polycarbonate; metal sheets such as aluminum foil and aluminum alloy foil; ordinary papers; baryta paper; resin-coated papers; pigment papers containing titanium dioxide or the like; and papers sized with polyvinyl alcohol or the like. A plastic film is preferably employed as the support material.

Depending on the speed class of the screens for which a synergistic effect has to be attained in the relation between speed and sharpness, supports, characterized by their reflectance properties, expressed as % reflectance over the wavelength range from 350 to 600 nm, are used. Such supports can be highly light reflecting, e.g. polyethyleneterephthalate comprising a white pigment, e.g. $BaSO_4$, $TiO_2$, etc, or it can be light absorbing supports, e.g. polyethylenetrephthalate comprising a black pigment, e.g. carbon black. Supports comprising dyes or pigments that absorb light of a specific wavelength can also be useful in the preparation of X-ray intensifying screens according to this invention.

In most applications the phosphor layers contain sufficient binder to give structural coherence to the layer. In view of a possible phosphor recovery from worn-out screens the binder of the phosphor containing layer is preferably soluble and remains soluble after coating.

Useful binders, a non-limitative survey of which is given herein, include proteinaceous binders, e.g. gelatin, polysaccharides such as dextran, gum arabic, and synthetic polymers such as polyvinyl butyral, polyvinyl acetate, nitrocellulose, ethylcellulose, vinylidene chloride-vinyl chloride copolymer, polyalkyl (meth)acrylate, vinyl chloride-vinyl acetate copolymer, polyurethane, cellulose acetate, cellulose acetate butyrate, polyvinyl alcohol, polystyrene, polyester, etc. These and other useful binders are disclosed e.g. in US 2502529, US 2887379, US 3617285, US 3300310, US 3300311 and US 3743833.

A mixture of two or more of these binders may be used, e.g., a mixture of polyethyl acrylate and cellulose acetobutyrate.

The weight ratio of phosphor to binder is generally within the range of from 50:50 to 89:11, preferably from 80:20 to 89:11.

The screen according to the present invention may comprise a supported layer of phosphor particles dispersed in a binding medium comprising one or more rubbery and/or elastomeric polymers as described in EP-A 648 254 and EP-A 647 258. In this way a ratio by weight of pigment to binding medium of more than 90:10 and more preferably of at least 93:7, e.g. 98:2 can be obtained providing besides an excellent image resolution a high ease of manipulation as a result of a good elasticity of the screen and good adhesion properties between the support and the phosphor layer. Problems concerning staining of screens comprising said rubbery binder(s) may be overcome by the addition of known rubber anti-oxidation compounds like IRGANOX 1010 and IRGASTAB T36 (trademarked products of CIBA-GEIGY, Basel, Switzerland), ANTIOXIDANT 330 (trademarked product of ETHYL CORP.,Richmond,USA), VANOX 2246 (trademarked product of VANDERBILT ENERGY CORP., Denver, Canada) etc, this list being non-limitative. The binder used in screens according to the present invention, with high phosphor to binder ratio, can beneficially be a polymer P having a $T_g \leq 0$ °C, an average molecular weight ($MG_{avg}$) between 5000 and $10^7$, being soluble in ethylacetate for at least 5 % by weight (% wt/wt). A self-supporting layer of 82 % by volume of phosphor particles in said polymer P, having a thickness so has to comprise 100 mg of phosphor particles per cm$^2$, has an elongation to break of at least 1 %. Such polymers have been disclosed in European Application 95202159.0 filed on August 8, 1995.

The phosphor layer can be applied to the support by employing a method such as vapour deposition, sputtering and spraying but is usually applied by the following procedure.

Phosphor particles and a binder are added to an appropriate solvent as described hereinafter, and are then mixed to prepare a coating dispersion comprising the phosphor particles homogeneously dispersed in the binder solution. Said coating dispersion may further comprise a dispersing agent and plasticizer and filler material as described hereinafter.

The coating dispersion containing the phosphor particles and the binder is applied uniformly onto the surface of the support to form a layer of the coating dispersion. The coating procedure may proceed according to any conventional method such as doctor blade coating, dip-coating or roll coating.

For the preparation of highly abrasion resistant and chemically resistant phosphor-binder layers the binder is cured. Curing of the binder may proceed photochemically by means of UV radiation or with electron beam (EB) as described e.g. in Research Disclosure December 1977, item 16435 or proceeds purely chemically as described e.g. in US-P 4,508,636. It may also be cured by moisture as described in EP-A 541 146. Curing may also be performed by heating.

In the preparation of the phosphor screen having a primer layer between the substrate and the fluorescent layer, the primer layer is provided on the substrate beforehand, and then the phosphor dispersion is applied to the primer layer and dried to form the fluorescent layer.

After applying the coating dispersion onto the support, the coating dispersion is then heated slowly to dryness so as to complete the formation of a phosphor layer.

In order to remove as much as possible entrapped air in the phosphor coating composition it can be subjected to an ultra-sonic treatment before coating. The phosphor-binder layer (as described e.g. in US-P 4,059,768) can be calendered to improve the phosphor packing density in the dried layer.

Useful solvents for the binder of the phosphor containing layer, employable in the preparation of the phosphor coating dispersion include lower alcohols such as methanol, ethanol, n-propanol and n-butanol; chlorinated hydrocarbons such as methylene chloride and ethylene chloride; ketones such as acetone, butanone, methyl ethyl ketone and methyl isobutyl ketone; esters of lower alcohols with lower aliphatic acids such as methyl acetate, ethyl acetate and butyl acetate; ethers such as dioxane, ethylene glycol monoethylether; methyl glycol; and mixtures of the above-mentioned solvents.

Useful dispersing agents for the phosphor particles in the coating dispersion to improve the dispersibility of the phosphor particles therein, may contain a variety of additives such as a plasticizer for increasing the bonding between the binder and the phosphor particles in the phosphor layer. Examples of the dispersing agent include ionic and nonionic well-known dispersing agents or combinations thereof, e.g., DISPERSE AYD (trade name of Daniel Products Company, New Jersey, USA) GAFAC RM 610 (a tradename a polyoxyethylene (20) sorbitan monopalmitate and monolaurate marketed by General Aniline and Film Company (GAF) New York, USA, polymeric surfactants such as the acrylic graft copolymer, PHOSPHOLIPON 90 (trade name) marketed by Nattermann-Phospholipid GmbH, Köln, W. Germany, silane dispersing agents and surfactants e.g. DOW CORNING 190 (trade name) and SILANE Z6040 (trade name) marketed by Dow Corning Corporation, Midland, Michigan, USA or glymo 3-glycidyloxypropylmethoxysilane or organosulfate polysilanes, unsaturated p-aminamide salts and high molecular acid esters such as ANTI TERRA U 80 (trade name) marketed by BYK-Chemie GmbH, Wesel, W. Germany, high molecular unsaturated polyesters, etc. Dispersing agents are added in an amount of 0.05 to 10 % by weight based on the phosphor.

Useful plasticizers include phosphates such as triphenyl phosphate, tricresyl phosphate and diphenyl phosphate; phthalates such as diethyl phthalate and dimethoxyethyl phthalate; glycolates such as ethylphthalyl ethyl glycolate and butylphthalyl butyl glycolate; polymeric plastizers, e.g. and polyesters of polyethylene glycols with aliphatic dicarboxylic acids such as polyester of triethylene glycol with adipic acid and polyester of diethylene glycol with succinic acid.

After the formation of the fluorescent layer, a protective layer is generally provided on top of the fluorescent layer.

In a preferred embodiment the protective coating has a layer thickness d comprised between 1 and 50 $\mu$m and an embossed surface roughness is applied for high ease of manipulation, thereby avoiding sticking, friction and electrostatic attraction with maintenance of an excellent image resolution.

The embossed protective layer can be provided on the phosphor layer in order to protect it against mechanical and chemical damage by the steps of (1) coating onto said phosphor containing layer a liquid radiation-curable composition having at the coating temperature a viscosity of at least 450 mPa.s, measured with a Hoeppler viscometer,that does not penetrate for a substantial degree into the phosphor containing layer,
(2) providing an embossed structure to the coating, and
(3) curing said coating by radiation.

For more details concerning preferred protective coatings with embossed surface there is referred to EP-A 510 753 and EP-A 510 754.

EXAMPLES

SENSITOMETRY AND IMAGE QUALITY FOR INTENSIFYING SCREENS

1. Exposure

Pairs of screens were arranged in the same type of cassette and between the screens and in contact therewith a same duplitized (double-side silver halide emulsion coated) film was inserted. The X-ray exposure proceeded according to ISO/DP9236 with 77 median kVp X-rays for chest exposure.

2. The film

The film was a half speed, duplitized, blue sensitive commercially available film, AGFA CURIX HCU, (tradename of Agfa-Gevaert NV Mortsel, Belgium).

3. Processing of the exposed material

The processing of the thus exposed silver halide emulsion material proceeded with the following developing liquid, followed by fixing and rinsing at the indicated temperature and processing time.

Composition of the developing liquid (pH : 10.1) - (35 °C, 27 s).

| Hydroquinone | 30 g/l |
| Potassium sulphite | 64 g/l |
| 1-Phenyl-3-pyrazolidinone | 1.5 g/l |
| Potassium bromide | 4 g/l |
| Glutardialdehyde | 4.7 g/l |
| The pH was adjusted at 10.1 with bicarbonate/carbonate buffer. | |

Composition of the fixing liquid (pH : 4.3) - (34 °C, 18 s).

| Ammonium thiosulphate | 132 g/l |
| Sodium sulphite | 10.8 g/l |
| Aluminium sulphate | 5.4 g/l |
| The pH was adjusted at 4.3 with acetic acid/acetate buffer.0 | |

The rinsing proceeded with tap water at a temperature of 27 °C for a duration of 28 s.

4. Determination of the square wave response SWR

The determination of the SWR value for intensifying screens proceeded as described in DIN 6867, 2nd draft 1988. The SWR values were determined at 1 line pair per mm and 3 line pairs per mm (SWR1 and SWR3). The results are reported in table 4.

5. Speed measurement

The determination of the photographic speed S of said screens proceeded according to the International Standard method ISO/DP9236 (42N2063) Revised edition of Nov. 1986. The values are given in table 3 as $1000/\mu Gy$ for a density of 1.00 above fog.

PREPARATION OF THE SCREENS

Seven pairs of invention screens (E1 to E7) were prepared and 4 pairs of non-invention screens (CE1 to CE4). The phosphor coating compositions were prepared by intimately mixing the following components :

| | |
|---|---|
| $BaFBr{:}0.01Eu^{2+(3+)}$ | P g |
| $(Y_{0.999},Sr_{0.001})TaO_4{:}0.01Nb$ | Q g |
| cellulose acetobutyrate (30 % in 2-butanone) | 1.72 g |
| polyethyl acrylate (30 % in ethyl acetate) | 15.46 g |
| ethyl acetate | 10.70 g |
| methyl glycol | 8.72 g |
| methoxypropanol | 26.7 g |
| dispersing agent DISPERSE AYD (trade name) | 1.02 g |

For the different screens the relative value for Q and P were changed, but for all screen the sum of P and Q was the same and was 200 g.

The compositions were doctor blade coated onto a subbed 200 micron thick pigmented polyethylene terephthalate supports.

The amounts of the phosphor, the total phosphor content and the support for the pairs of screens are summarized in table 2.

By roll coater onto the dried phosphor-containing layer a cellulose acetobutyrate layer having a dry thickness of 10 micron was applied as protective layer.

TABLE 2

| Pair # | MYT % | BAF % | Support Pigment | | Phosphor content[+] | |
|---|---|---|---|---|---|---|
| | | | Front | Back | Front | Back |
| E1 | 57 | 43 | A** | B** | 47 | 80 |
| E2 | 78 | 22 | A | B | 60 | 80 |
| E3 | 83 | 17 | A | B | 50 | 77 |
| E4 | 40 | 60 | A | A | 60 | 78 |
| E5 | 36 | 64 | A | B | 57 | 77 |
| E6 | 25 | 75 | A | B | 56 | 60 |
| E7 | 45 | 55 | A | A | 63 | 80 |
| CE1 | 100[†] | 0 | A | A | 65 | 65 |
| CE2 | 0* | 30 | B | B | 68 | 68 |
| CE3 | 50[†] | 50 | B | B | 60 | 76 |
| CE4 | 0 | 100 | B | B | 56 | 56 |

[†] M' monoclinic $(Y_{0.999},Sr_{0.001})TaO_4{:}0.01Nb$
* 70 % of $CaWO^4$ instead of MYT
** A = $BaSO_4$, B = carbon black
[+] in $mg/cm^2$

The speed and the sharpness of these eleven screen pairs were measured as described above. The screen/film combination were used in cassette. The results, speed class and resolution (in SWR) are reported in table 3.

TABLE 3

| Pair # | Speed 1000/μGy | SWR % | |
|---|---|---|---|
| | | 1 lp/mm | 3 lp/mm |
| E1 | 275 | 76 | 35 |
| E2 | 275 | 75 | 30 |
| E3 | 251 | 75 | 31 |
| E4 | 355 | 73 | 29 |
| E5 | 417 | 71 | 27 |
| E6 | 417 | 70 | 25 |
| E7 | 417 | 68 | 23 |
| CE1 | 210 | 74 | 31 |
| CE2 | 235 | 70 | 24 |
| CE3 | 400 | 70 | 24 |
| CE4 | 447 | 65 | 19 |

It is clear that the invention screen pairs provide X-ray systems with speed/sharpness ratios that are equal to or better than the prior art screen pairs.

**Claims**

1. A supported or self-supporting X-ray intensifying screen comprising particles of a niobium doped, monoclinic M, yttriumtantalate (MYT) phosphor corresponding to formula I $(Y_{1-(2/3)x},Sr_x)TaO_4$:nNb wherein $0 \leq x \leq 1$ and $0 < n \leq 0.05$,
and particles of an europium doped bariumfluorohalide (BAF) phosphor and wherein both said phosphors are present in a ratio MYT:BAF between 25:75 and 100:1, provided that when x = 0, said ratio MYT:BAF is between 25:75 and 99:1.

2. A screen according to claim 1, wherein said screen has a total phosphor content between 30 and 90 mg/cm$^2$.

3. A screen according to claim 1, wherein said total phosphor content is between 40 and 80 mg/cm$^2$.

4. A screen according to any of the preceding claims, wherein $10^{-5} \leq x \leq 1$.

5. A screen according to any of the preceding claims, wherein said europium doped bariumfluorohalide (BAF) phosphor particles correspond to the formula : BaFBr:zEu$^{2+(3+)}$, wherein $10^{-3} \leq z \leq 0.05$.

6. A radiographic screen/film combination comprising a duplitized UV/blue sensitive film sandwidched between a pair of X-ray intensifying screens, characterised in that

   i) at least one screen of said pair of screens corresponds to any of the preceding claims and
   ii) said combination belongs to a speed class situated between a 50 and 800 speed class.

7. A screen/film combination according to claim 6, wherein each screen of said pair of screens corresponds to any of claims 1 to 5.

**European Patent Office**

# EUROPEAN SEARCH REPORT

Application Number

EP 96 20 2050

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X,D | EP-A-0 592 724 (AGFA-GEVAERT)<br>* the whole document *<br>--- | 1-7 | G21K4/00<br>C09K11/85<br>C09K11/78 |
| X,D | EP-A-0 435 241 (NICHIA)<br>* the whole document *<br>----- | 1-7 | |

**TECHNICAL FIELDS SEARCHED (Int.Cl.6)**

C09K
G21K

The present search report has been drawn up for all claims

| Place of search | Date of completion of the search | Examiner |
|---|---|---|
| THE HAGUE | 11 November 1996 | Drouot, M-C |